(19) Europäisches Patentamt
European Patent Office
Office européen des brevets

(11) **EP 2 824 195 B1**

(12) **EUROPEAN PATENT SPECIFICATION**

(45) Date of publication and mention of the grant of the patent:
**25.04.2018 Bulletin 2018/17**

(21) Application number: **13757747.4**

(22) Date of filing: **01.03.2013**

(51) Int Cl.:
**C21D 9/00** *(2006.01)*　　**B21D 22/20** *(2006.01)*
**C22C 38/00** *(2006.01)*　　**C22C 38/60** *(2006.01)*

(86) International application number:
**PCT/JP2013/055675**

(87) International publication number:
**WO 2013/133164 (12.09.2013 Gazette 2013/37)**

(54) **METHOD FOR MANUFACTURING PRESS-FORMED PRODUCT, AND PRESS-FORMED PRODUCT**

VERFAHREN ZUR HERSTELLUNG EINES PRESSGEFORMTEN PRODUKTS UND PRESSGEFORMTES PRODUKT

PROCÉDÉ DE FABRICATION D'UN PRODUIT FAÇONNÉ À LA PRESSE, ET PRODUIT FAÇONNÉ À LA PRESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2012 JP 2012053849**

(43) Date of publication of application:
**14.01.2015 Bulletin 2015/03**

(73) Proprietor: **Kabushiki Kaisha Kobe Seiko Sho (Kobe Steel, Ltd.)**
**Kobe-shi, Hyogo 651-8585 (JP)**

(72) Inventors:
• **MURAKAMI Toshio**
  **Hyogo 651-2271 (JP)**
• **HATA Hideo**
  **Hyogo 651-2271 (JP)**
• **NAITOU Junya**
  **Hyogo 651-2271 (JP)**
• **OKITA Keisuke**
  **Hyogo 651-2271 (JP)**

• **IKEDA Shushi**
  **Aichi 450-0003 (JP)**

(74) Representative: **Müller-Boré & Partner**
**Patentanwälte PartG mbB**
**Friedenheimer Brücke 21**
**80639 München (DE)**

(56) References cited:
| | |
|---|---|
| EP-A- 1 642 991 | EP-A- 2 719 788 |
| CA-A- 2 802 033 | JP-A- 2005 097 725 |
| JP-A- 2007 211 276 | JP-A- 2008 019 453 |
| JP-A- 2008 174 813 | JP-A- 2010 043 323 |
| JP-A- 2010 043 323 | JP-A- 2010 174 277 |
| JP-A- 2010 174 293 | JP-A- 2011 101 889 |
| US-A- 2011 182 765 | |

• H. KARBASIAN ET AL: "A review on hot stamping", JOURNAL OF MATERIALS PROCESSING TECHNOLOGY, vol. 210, no. 15, 1 November 2010 (2010-11-01), pages 2103-2118, XP055141086, ISSN: 0924-0136, DOI: 10.1016/j.jmatprotec.2010.07.019

**Description**

The present invention relates to a press-formed product used in manufacturing structural components of an automobile and a method for manufacturing such a press-formed product, and relates more specifically to a press-formed product manufactured by applying a press forming method obtaining a predetermined strength by being subjected to heat treatment simultaneously with impartation of the shape in forming a pre-heated steel sheet (blank) into a predetermined shape, and a useful method for manufacturing such a press-formed product.

As one of the fuel economy improvement measures of an automobile triggered by global environment problems, weight reduction of the vehicle body is advancing, and it is necessary to high-strengthen a steel sheet used for an automobile as much as possible. On the other hand, when a steel sheet is high-strengthened, shape accuracy in press forming comes to deteriorate.

On this account, a hot press forming method has been employed for manufacturing components in which a steel sheet is heated to a predetermined temperature (for example, a temperature at which a state of an austenitic phase is achieved), the strength is lowered, the steel sheet is thereafter formed using a tool of a temperature (room temperature for example) lower than the steel sheet, thereby impartation of a shape and rapid heat treatment (quenching) utilizing the temperature difference of the both are executed simultaneously, and the strength after forming is secured. Also, such a hot-press forming method is referred to by various names such as a hot forming method, hot stamping method, hot stamp method and die quench method, in addition to the hot press method.

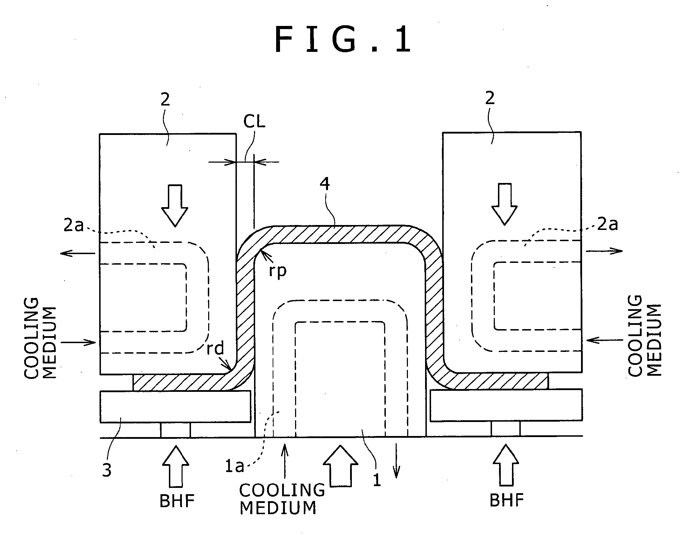

Fig. 1 is a schematic explanatory drawing showing a tool configuration for executing hot press forming described above, 1 in the drawing is a punch, 2 is a die, 3 is a blank holder, 4 is a steel sheet (blank), BHF is a blank holding force, rp is punch shoulder radius, rd is die shoulder radius, and CL is punch/die clearance respectively. Also, out of these components, in the punch 1 and the die 2, passages 1a, 2a through which a cooling medium (water for example) can pass are formed inside of each, and it is configured that these members are cooled by making the cooling medium pass through these passages.

In hot press forming (hot deep drawing for example) using such a tool, forming is started in a state the steel sheet (blank) 4 is heated to a single-phase zone temperature of $Ac_3$ transformation point or above and is softened. That is, in a state the steel sheet 4 in a high temperature state is sandwiched between the die 2 and the blank holder 3, the steel sheet 4 is pressed in to the inside of a hole of the die 2 by the punch 1, and is formed into a shape corresponding to the shape of the outer shape of the punch 1 while reducing the outside diameter of the steel sheet 4. Also, by cooling the punch 1 and the die 2 in parallel with forming, heat removal from the steel sheet 4 to the tools (the punch 1 and the die 2) is executed, holding and cooling are further executed at a forming bottom dead point (the temporal point the tip of the punch is positioned at the deepest point: the state shown in Fig. 1), and thereby quenching of the raw material is executed. By executing such a forming method, a formed product of 1,500 MPa class with excellent dimensional accuracy can be obtained, the forming load can be reduced compared with a case a component of a same strength class is cold-formed, and therefore less capacity of the press machine is needed.

As a steel sheet for hot pressing use widely used at present, one using 22Mn-B5 steel as a raw material is known. The steel sheet has the tensile strength of approximately 1,500 MPa and the elongation of approximately 6-8%, and is applied to a shock resistant member (a member not causing deformation as much as possible and not causing breakage in collision). However, application to a component requiring deformation such as an energy absorption member is difficult because elongation (ductility) is low.

As a steel sheet for hot pressing use exerting excellent elongation, technologies such as the patent literatures 1-4 for example have also been proposed. According to these technologies, the basic strength class of each steel sheet is adjusted by setting the carbon content in the steel sheet to various ranges, and elongation is improved by introducing ferrite with high deformability and reducing the average grain size of ferrite and martensite. Although these technologies are effective in improving elongation, they are still insufficient from the viewpoint of improving elongation matching the strength of the steel sheet. For example, those having 1,470 MPa or more of the tensile strength TS have the elongation EL of approximately 10.2% at the maximum, and further improvement is required.

Patent Literature 5, which is considered to represent prior art under Art. 54(3) EPC, discloses a hot press-formed product, comprising a thin steel sheet formed by a hot press-forming method, and having a metallic structure that contains martensite at 80% to 97% by area and retained austenite at 3% to 20% by area, the remainder structure of which is at 5% by area or lower.

[Patent Literature 1] JP-A 2010-065292
[Patent Literature 2] JP-A 2010-065293
[Patent Literature 3] JP-A 2010-065294
[Patent Literature 4] JP-A 2010-065295
[Patent Literature 5] EP 2 719 788 A1

The present invention has been developed in view of such circumstances as described above, and its object is to provide a method useful in obtaining a press-formed product that can achieve the balance of high strength and elongation with a high level, and a press-formed product that can exert the feature described above.

The method for manufacturing a hot press-formed product of the present invention which could achieve the object described above includes the steps of:

heating a steel sheet for hot pressing use to a temperature of $AC_3$ transformation point or above and 950°C or below, the steel sheet for hot pressing use consisting of:

C: 0.15-0.5% means mass%, hereinafter the same with respect to the chemical component composition;
Si: 0.2-3%;
Mn: 0.5-3%;
P: 0.05% or less, exclusive of 0%;
S: 0.05% or less, exclusive of 0%;
Al: 0.01-1%;
B: 0.0002-0.01%;
Ti: 3.4[N]+0.01% or more and 3.4[N]+0.1% or less, [N] expresses the content mass% of N ; and
N: 0.001-0.01% respectively,

optionally at least one element selected from the group consisting of V, Nb and Zr by 0.1% or less, exclusive of 0%, in total;
optionally at least one element selected from the group consisting of Cu, Ni, Cr and Mo by 1% or less, exclusive of 0%, in total; and
optionally at least one element selected from the group consisting of Mg, Ca and REM by 0.01% or less, exclusive of 0%, in total,
with the remainder consisting of iron and inevitable impurities,
Ti-containing precipitates contained in the steel sheet, each of which having an equivalent circle diameter of 30 nm or less, have an average equivalent circle diameter of 3 nm or more, wherein the Ti-containing precipitates are selected from TiC, TiN, TiVC, TiNbC, TiVCN and TiNbCN,
and the precipitated Ti amount and the total Ti amount in the steel fulfilling the relationship represented by formula (1) shown below;
thereafter starting press forming; and
being held at the bottom dead point and being cooled to a temperature lower than martensite transformation starting temperature Ms while securing the average cooling rate of 20°C/s or more within a tool. Also, "equivalent circle diameter" is the diameter of an imaginary circle having an area same to the size (area) of Ti-containing precipitates (TiC for example) ("the average equivalent circle diameter" is the average value thereof).

$$\frac{\text{Precipitated Ti amount [mass\%]}}{[\text{total Ti amount mass\% - 3.4[N]}]} \geq 0.5 \times \cdots (1)$$

In the formula (1), [N] represents the content mass % of N in the steel.

In the press-formed product obtained by the method for manufacturing, the metal microstructure is of martensite: 80-97 area%, retained austenite: 3-20 area%, and the remainder microstructure: 5 area% or less, carbon content in the retained austenite is 0.50% or more, and the balance of high strength and elongation can be achieved with a high level and as a uniform property within the formed product.

According to the present invention, because such a steel sheet is used that the chemical component composition is strictly stipulated, the size of Ti-containing precipitates is controlled, and the precipitation rate is controlled for Ti that does not form TiN, by executing hot press forming under a predetermined condition, the level of the high strength-elongation balance of the formed product can be raised.

[Fig. 1] Fig. 1 is a schematic explanatory drawing showing a tool configuration for executing hot press forming.

The present inventors carried out studies from various aspects in order to achieve such a steel sheet for hot pressing use that can obtain a press-formed product exhibiting excellent ductility (elongation) also while securing high strength after press-forming in manufacturing the press-formed product by heating a steel sheet to a predetermined temperature and thereafter executing hot press forming.

As a result of the studies, it was found out that, when the chemical component composition of the steel sheet for hot pressing use was strictly stipulated and the size of Ti-containing precipitates and precipitated Ti amount were controlled, by hot press forming of the steel sheet under a predetermined condition, a press-formed product in which retained austenite of a predetermined amount was secured after forming and intrinsic ductility (residual ductility) was enhanced could be obtained, and the present invention was completed.

In the steel sheet for hot pressing use of the present invention, it is necessary to strictly stipulate the chemical component composition, and the reasons for limiting the range of each chemical component are as follows.

[C: 0.15-0.5%]

C is an important element in securing retained austenite. By concentration to austenite in heating to a single phase zone temperature of $Ac_3$ transformation point or above, retained austenite is formed after quenching. Further, C is also an important element in controlling increase the amount of martensite and the strength of martensite. When C content is less than 0.15%, a predetermined amount of retained austenite cannot be secured and excellent ductility is not obtained. Also, the strength of martensite is insufficient and the strength of the formed product deteriorates. On the other hand, when C content becomes excessive and exceeds 0.5%, the strength increases excessively, and the ductility deteriorates. Preferable lower limit of C content is 0.18% or more (more preferably 0.20% or more), and preferable upper limit is 0.45% or less (more preferably 0.40% or less).

[Si: 0.2-3%]

Si exerts an effect of increasing carbon of a solid solution state and forming retained austenite by suppressing the events that martensite is tempered during cooling of tool-quenching and cementite is formed. When Si content is less than 0.2%, a predetermined amount of retained austenite cannot be secured, and excellent ductility is not obtained. Also, when Si content becomes excessive and exceeds 3%, the solution strengthening amount increases excessively, and the ductility largely deteriorates. Preferable lower limit of Si content is 1.15% or more (more preferably 1.20% or more), and preferable upper limit is 2.7% or less (more preferably 2.5% or less).

[Mn: 0.5-3%]

Mn is an element stabilizing austenite and contributes to increase of retained austenite. Further, Mn is an element effective also in enhancing quenchability, suppressing formation of ferrite, pearlite and bainite during cooling after heating, and securing retained austenite. In order to exert such effects, Mn should be contained by 0.5% or more. Although Mn content is preferable to be as much as possible when only properties are considered, because the cost of adding alloy increases, Mn content is made 3% or less. Preferable lower limit of Mn content is 0.7% or more (more preferably 1.0% or more), and preferable upper limit is 2.5% or less (more preferably 2.0% or less).

[P: 0.05% or less (exclusive of 0%)]

Although P is an element inevitably included in steel, because P deteriorates ductility, P is preferable to be reduced as much as possible. However, because extreme reduction causes increase of the steel making cost and to make it 0% is difficult in manufacturing, P content is made 0.05% or less (exclusive of 0%). Preferable upper limit of P content is 0.045% or less (more preferably 0.040% or less).

[S: 0.05% or less (exclusive of 0%)]

Similar to P, S is also an element inevitably included in steel, S deteriorates ductility, and therefore S is preferable to be reduced as much as possible. However, because extreme reduction causes increase of the steel making cost and to make it 0% is difficult in manufacturing, S content is made 0.05% or less (exclusive of 0%). Preferable upper limit of S content is 0.045% or less (more preferably 0.040% or less).

[Al: 0.01-1%]

A1 is useful as a deoxidizing element, fixes solid-solution N present in steel as AlN, and is useful in improving ductility. In order to effectively exert such an effect, Al content should be 0.01% or more. However, when Al content becomes excessive and exceeds 1%, $Al_2O_3$ is formed excessively, and ductility is deteriorated. Also, preferable lower limit of Al content is 0.02% or more (more preferably 0.03% or more), and preferable upper limit is 0.8% or less (more preferably 0.6% or less).

[B: 0.0002-0.01%]

B is an element effective in suppressing ferrite transformation, pearlite transformation and bainite transformation, suppressing formation of ferrite, pearlite and bainite during cooling after heating, and securing retained austenite. In order to exert such effects, B should be contained by 0.0002% or more, however, even when B is contained excessively exceeding 0.01%, the effects saturate. Preferable lower limit of B content is 0.0003% or more (more preferably 0.0005% or more), and preferable upper limit is 0.008% or less (more preferably 0.005% or less).

[Ti: 3.4[N]+0.01% or more and 3.4[N]+0.1% or less: [N] expresses content (mass%) of N]

Ti develops improvement effect of quenchability by fixing N and holding B in a solid solution state. In order to exert such an effect, it is important to contain Ti more than the stoichiometric ratio of Ti and N (3.4 times of N content) by 0.01% or more. However, when Ti content becomes excessive to become more than 3.4[N]+0.1%, Ti-containing precipitates (TiN for example) formed are finely dispersed, impede growth of martensite formed into a lath shape during cooling after being heated to austenite region in the longitudinal direction, and have lath microstructure having a small aspect ratio. On the other hand, when the precipitates are made sufficiently large, martensite microstructure having a large aspect ratio is obtained, retained austenite that is stable even though the C amount in retained austenite is same is obtained, and the property (elongation) comes to improve. Preferable lower limit of Ti content is 3.4[N]+0.02% or more (more preferably 3.4[N]+0.05% or more), and preferable upper limit is 3.4[N]+0.09% or less (more preferably 3.4[N]+0.08% or less).

[N: 0.001-0.01%]

Because N deteriorates quenchability improvement effect by fixing B as BN, N is preferable to be reduced as much as possible, however, because there is a limit in reducing N in an actual process, 0.001% is made the lower limit. Also, when N content becomes excessive, the ductility deteriorates by strain aging, N precipitates as BN and deteriorates quenchability improvement effect by solid-dissolved B, and therefore the upper limit is made 0.01%. Preferable upper limit of N content is 0.008% or less (more preferably 0.006% or less).

The basic chemical composition in the steel sheet for hot pressing use of the present invention is as described above, and the remainder is iron and inevitable impurities other than P and S (O and H for example). Further, in the steel sheet for hot pressing use of the present invention, according to the necessity, it is also useful to further contain (a) at least one element selected from the group consisting of V, Nb and Zr by 0.1% or less (exclusive of 0%) in total, (b) at least one element selected from the group consisting of Cu, Ni, Cr and Mo by 1% or less (exclusive of 0%) in total, (c) at least one element selected from the group consisting of Mg, Ca and REM by 0.01% or less (exclusive of 0%) in total, and the properties of the steel sheet for hot pressing use are improved further according to the kind of the element contained. Preferable range when these elements are contained and reasons for limiting the range are as follows.

[At least one element selected from the group consisting of V, Nb and Zr by 0.1% or less (exclusive of 0%) in total]

V, Nb and Zr have effects of forming fine carbide and miniaturizing the microstructure by a pinning effect. In order to exert such effects, it is preferable to contain them by 0.001% or more in total. However, when the content of these elements becomes excessive, coarse carbide is formed and becomes a start point of breakage, and ductility is deteriorated adversely. Therefore, it is preferable to contain these elements by 0.1% or less in total. More preferable lower limit of the content of these elements in total is 0.005% or more (further more preferably 0.008% or more), and more preferable upper limit in total is 0.08% or less (further more preferably 0.06% or less).

[At least one element selected from the group consisting of Cu, Ni, Cr and Mo: 1% or less (exclusive of 0%) in total]

Cu, Ni, Cr and Mo suppress ferrite transformation, and pearlite transformation, therefore prevent formation of ferrite and pearlite during cooling after heating, and act effectively in securing retained austenite. In order to exert such effects, it is preferable to contain them by 0.01% or more in total. Although the content is preferable to be as much as possible when only the properties are considered, because the cost for adding alloys increases, 1% or less in total is preferable. Also, because there is an action of largely increasing the strength of austenite, the load of hot rolling increases, manufacturing of the steel sheet becomes difficult, and therefore 1% or less is also preferable from the viewpoint of manufacturability. More preferable lower limit of these elements in total is 0.05% or more (further more preferably 0.06% or more), and more preferable upper limit in total is 0.5% or less (further more preferably 0.3% or less).

[At least one element selected from the group consisting of Mg, Ca and REM by 0.01% or less (exclusive of 0%) in total]

Because these elements miniaturize inclusions, they act effectively in improving ductility. In order to exert such effects, it is preferable to contain them by 0.0001% or more in total. Although the content is preferable to be as much as possible when only the properties are considered, because the effects saturate, 0.01% or less in total is preferable. More preferable lower limit of these elements in total is 0.0002% or more (further more preferably 0.0005% or more), and more preferable upper limit in total is 0.005% or less (further more preferably 0.003% or less).

In the steel sheet for hot pressing use that is used in the present invention, (A) some of Ti-containing precipitates contained in the steel sheet, each of which having an equivalent circle diameter of 30 nm or less, have an average equivalent circle diameter of 3 nm or more, and (B) relationship of precipitated Ti amount (mass%)-3.4[N]$\geq$0.5$\times$[total Ti amount (mass%)-3.4[N]] (the relationship of the formula (1) described above) is fulfilled, are also important requirements.

Control of Ti-containing precipitates and the formula (1) is for improving elongation in the formed product and is the control required fundamentally for a formed product, however, variation of these values between before and after hot-press forming is small, and therefore it is necessary that they have already been controlled at the stage of before forming (the steel sheet for hot pressing use). When Ti excessive relative to N in the steel sheet before forming is finely dispersed or majority thereof is present in a solid solution state in the steel sheet before hot press forming, much amount of Ti comes to be present finely in heating of hot press forming. Thus, in martensite transformation occurring during rapid cooling within the tool after heating, growth of martensite lath in the longitudinal direction is impeded, growth in the width direction is promoted, and the aspect ratio reduces. As a result, discharge of carbon from martensite lath to surrounding retained austenite is delayed, the carbon amount in retained austenite reduces, the stability of retained austenite deteriorates, and therefore the improvement effect of the elongation is not obtained sufficiently.

From such a viewpoint, it is necessary to disperse the Ti-containing precipitates coarsely, and, for that purpose, it is necessary that some of the Ti-containing precipitates contained in the steel sheet, each of which having an equivalent circle diameter of 30 nm, have an average equivalent circle diameter of 3 nm or more (the requirement of (A) described above). Also, the reason the equivalent circle diameter of the Ti-containing precipitates of the object is stipulated to be 30 nm or less is that it is necessary to control the Ti-containing precipitates and excluding TiN formed coarsely in the melting stage that does not affect microstructure change and properties thereafter. The size of the Ti-containing precipitates (the average equivalent circle diameter of the Ti-containing precipitates whose equivalent circle diameter is 30 nm or less) is preferably 5 nm or more, more preferably 10 nm or more. Further, the Ti-containing precipitates of the object of the present invention also include the Ti-containing precipitates TiVC, TiNbC, TiVCN, TiNbCN in addition to TiC and TiN.

Also, in the steel sheet for hot pressing use, it is necessary that, out of Ti, majority of Ti other than that used for precipitating and fixing N is present in a precipitated state. For that purpose, it is necessary that the amount of Ti that is present as the precipitates other than TiN (that is precipitated Ti amount (mass%)-3.4[N]) is 0.5 times or more of the balance obtained by deducting Ti that forms TiN from total Ti (that is 0.5$\times$ [total Ti amount (mass%)-3.4[N]] or more) (the requirement of (B) described above). Precipitated Ti amount (mass%)-3.4[N] is preferably 0.6x[total Ti amount (mass%)-3.4[N]] or more, more preferably 0.7$\times$[total Ti amount (mass%)-3.4[N]] or more.

The steel sheet (the steel sheet for hot pressing use) as described above can be manufactured by that a billet obtained by melting steel having the chemical component composition as described above is subjected to hot rolling with heating temperature: 1,100°C or above (preferably 1,150°C or above) and 1,300°C or below (preferably 1,250°C or below) and the finish rolling temperature of 850°C or above (preferably 900°C or above) and 1,000°C or below (preferably 950°C or below), is made to stay thereafter in the temperature range of 700-650°C (medium air-cooling temperature) for 10 s or more, and is thereafter wound at the medium air-cooling temperature or below and 600°C or above (preferably 650°C or above). By this method, Ti-containing precipitates such as TiC formed during ferrite transformation are coarsened by causing ferrite transformation at a high temperature. Also, by raising the winding temperature, the Ti-containing precipitates such as TiC formed are grown and coarsened.

As another method, the steel sheet (the steel sheet for hot pressing use) can be manufactured by that a billet obtained by melting steel having the chemical component composition as described above is subjected to hot rolling with the heating temperature: 1,100°C or above (preferably 1,150°C or above) and 1,300°C or below (preferably 1,250°C or below) and the finish rolling temperature of 750°C or above (preferably 770°C or above) and 850°C or below (preferably 830°C or below), is made to stay thereafter in the temperature range of 750-700°C (medium air-cooling temperature) for 10 s or more, and is thereafter wound at the medium air-cooling temperature or below and 200°C or above (preferably 250°C or above). By this method, Ti-containing precipitates such as TiC are formed coarsely on the dislocation by finishing rolling at a temperature range where the dislocation introduced by hot rolling remains in austenite and cooling slowly immediately thereafter.

The method for manufacturing a steel sheet for hot pressing use is not limited to the methods described above, and such a method can also be employed for example that precipitates of a steel sheet in which precipitates are present finely are coarsened after hot rolling in a temperature range of reverse transformation point or below.

The steel sheet for hot pressing use having the chemical component composition and Ti-precipitation state as described above may be used for manufacturing by a hot press forming as it is, and may be used for manufacturing by hot press forming after being subjected to cold rolling with the draft: 10-80% (preferably 20-70%) after pickling. Further, it is also possible to subject the steel sheet for hot pressing use or the material obtained by cold rolling thereof to heat treatment in a temperature range (1,000°C or below for example) where the entire amount of Ti-containing precipitates are not solid-dissolved. Also, the steel sheet for hot pressing use of the present invention may be subjected to plating containing at least one element out of Al, Zn, Mg and Si on the surface thereof (the surface of the base steel sheet).

By using the steel sheet for hot pressing use as described above, executing heating to a temperature of $Ac_3$ transformation point or above and 950°C or below, thereafter starting press forming, and being held at the bottom dead point and executing cooling to a temperature lower than the martensite transformation starting temperature Ms while securing the average cooling rate of 20°C/s or more within the tool, the press-formed product having a single property can have an optimum microstructure (microstructure mainly of martensite) of a predetermine strength and high ductility. The reasons for stipulating each requirement in this forming method are as described below.

When the heating temperature of the steel sheet is lower than $Ac_3$ transformation point, sufficient austenite is not obtained in heating, and a predetermined amount of martensite cannot be secured in the final microstructure (the microstructure of the formed product). Also, when the heating temperature of the steel sheet exceeds 950°C, the grain size of austenite becomes large in heating, the martensite transformation starting temperature Ms and the martensite finishing temperature Mf rise, retained austenite cannot be secured in quenching, and excellent formability is not achieved. The heating temperature is preferably $Ac_3$ transformation point+20°C or above (more preferably $Ac_3$ transformation point+30°C or above) and 930°C or below.

In order to make austenite formed in the heating step described above a desired microstructure (microstructure mainly of martensite) while preventing formation of the microstructure such as ferrite, pearlite and bainite it is necessary to hold the steel sheet at the bottom dead point and to properly control the average cooling rate and the cooling finishing temperature within the tool. From such a viewpoint, it is necessary to make the average cooling rate at that time 20°C/s or more and to make the cooling finishing temperature (the rapid cooling finishing temperature) a temperature lower than the martensite transformation starting temperature Ms. The average cooling rate is preferably 30°C/s or more (more preferably 40°C/s or more). By making the rapid cooling finishing temperature a temperature or below, the temperature being lower than the martensite transformation starting temperature Ms, a predetermined amount of retained austenite is secured by causing martensite transformation of austenite that has been present in heating while preventing formation of the microstructure such as ferrite, pearlite and bainite and making fine austenite remain between the laths of martensite while securing the amount of martensite.

When the rapid cooling finishing temperature described above becomes the martensite transformation starting temperature Ms or above and the average cooling rate is less than 20°C/s, the microstructure such as ferrite, pearlite and bainite is formed, a predetermined amount of retained austenite cannot be secured, and the elongation (ductility) in the formed product deteriorates.

Although control of the average cooling rate basically becomes unnecessary at the stage the temperature becomes lower than the martensite transformation starting temperature Ms, cooling may be executed to the room temperature with the average cooling rate of 1°C/s or more and 100°C/s or less for example. Also, control of the average cooling rate during forming and after completion of forming can be achieved by means such as (a) to control the temperature of the forming tool (the cooling medium shown in Fig. 1 above), and (b) to control the thermal conductivity of the tool.

In the press-formed product obtained by this method for manufacturing, the metal microstructure is formed of martensite: 80-97 area%, retained austenite: 3-20 area%, and remaining microstructure: 5 area% or less, the carbon amount in retained austenite is 0.50% or more, and the balance of high strength and elongation can be achieved with a high level and as a uniform property within the formed product. The reasons for setting the range of each requirement (basic microstructure and carbon amount in retained austenite) in such a press-formed product are as described below.

By making the main microstructure of the press-formed product martensite that is of high strength and rich in ductility, both of high strength and high ductility of the press-formed product can be achieved. From such a viewpoint, the area fraction of martensite should be 80 area% or more. However, when this fraction exceeds 97 area%, the fraction of retained austenite becomes insufficient, and the ductility (residual ductility) deteriorates. Preferable lower limit of the fraction of martensite is 83 area% or more (more preferably 85 area% or more), and preferable upper limit is 95 area% or less (more preferably 93 area% or less).

Retained austenite has an effect of increasing the work hardening ratio (transformation induced plasticity) and improving ductility of the press-formed product by being transformed to martensite during plastic deformation. In order to exert such an effect, the fraction of retained austenite should be made 3 area% or more. Ductility becomes more excellent as the fraction of retained austenite is higher. In the composition used for a steel sheet for an automobile, retained austenite that can be secured is limited, and approximately 20 area% becomes the upper limit. Preferable lower limit of retained austenite is 5 area% or more (more preferably 7 area% or more).

Although ferrite, pearlite and bainite may be included as the remainder microstructure in addition to the microstructures described above, these microstructures are inferior in contribution to the strength and contribution to the ductility compared to other microstructures, and it is basically preferable not to be contained (it may be 0 area% also). However, up to 5 area% is allowable. The remainder microstructure is more preferably 4 area% or less, further more preferably 3 area% or less.

The carbon amount in retained austenite affects the timing of work induced transformation of retained austenite to martensite at the time of deformation such as the tensile test, and enhances the transformation induced plasticity (TRIP) effect by causing the work induced transformation at a higher strain zone as the carbon amount is higher. In the case of the process of the present invention, carbon is discharged during cooling from bainitic ferrite formed to surrounding austenite. At that time, if Ti-carbide or carbonitride dispersed in steel is dispersed coarsely, growth of bainitic ferrite in the longitudinal direction proceeds without being impeded, and therefore bainitic ferrite narrow in the width, long, and having a large aspect ratio is obtained. As a result, carbon is easily discharged from bainitic ferrite to the width direction, the carbon amount in retained austenite increases, and the ductility improves. From such a viewpoint, in the press-formed product of the present invention, the carbon amount in retained austenite in steel was stipulated to be 0.50% or more. Further, although the carbon amount in retained austenite can be concentrated to approximately 0.70%, approximately 1.0% is the limit.

According to the method of the present invention, because the properties such as strength and elongation of the formed product can be controlled and the press-formed product with high ductility (residual ductility) is obtained by properly adjusting the press forming conditions (heating temperature and cooling rate), application to a portion (energy absorption member for example) to which conventional press-formed products have not been easily applied also becomes possible, which is very useful in expanding the application range of the hot press-formed product.

Although the effect of the present invention will be shown below more specifically by examples, the examples described below do not limit the present invention, and any of the design alterations judging from the purposes described above and below is to be included in the technical range of the present invention.

[Examples]

Steel (steel Nos. 1-30) having the chemical component composition shown in Table 1 below was molten in vacuum, was made a slab for experiment, was thereafter made a steel sheet by hot rolling, was thereafter cooled, and was subjected to treatment that simulates winding (sheet thickness: 3.0 mm). The winding simulated treatment method included cooling to the winding temperature, putting the sample thereafter into a furnace heated to the winding temperature, holding for 30 min, and cooling in the furnace. The manufacturing condition for the steel sheet at that time is shown in Table 2 below. Also, $Ac_3$ transformation point and Ms point in Table 1 were obtained using the formula (2) and the formula (3) below (refer to "The Physical Metallurgy of Steels", Leslie, Maruzen Company, Limited (1985) for example). Also, the treatments (1) and (2) shown in the remarks column in Table 2 express that each treatment (rolling, cooling, alloying) shown below was executed.

$$Ac_3 \text{ transformation point (°C)} = 910 - 203 \times [C]^{1/2} + 44.7 \times [Si] - 30 \times [Mn] + 700 \times [P] + 400 \times [Al] + 400 \times [Ti] + 104 \times [V] - 11 \times [Cr] + 31.5 \times [Mo] - 20 \times [Cu] - 15.2 \times [Ni] \quad \cdots (2)$$

$$Ms \text{ point (°C)} = 550 - 361 \times [C] - 39 \times [Mn] - 10 \times [Cu] - 17 \times [Ni] - 20 \times [Cr] - 5 \times [Mo] + 30 \times [Al] \quad \cdots (3)$$

wherein [C], [Si], [Mn], [P], [Al], [Ti], [V], [Cr], [Mo], [Cu] and [Ni] represent the content (mass%) of C, Si, Mn, P, Al, Ti, V, Cr, Mo, Cu and Ni respectively. Also, when the element shown in each term of the formula (2) and the formula (3) above is not contained, calculation is done assuming that the term is null.

Treatment (1): The hot-rolled steel sheet was cold-rolled (sheet thickness: 1.6 mm), continuous annealing was thereafter simulated by a heat treatment simulator by heating to 800°C, maintaining thereafter for 90 s, cooling to 500°C with the average cooling rate of 20°C/s, and holding for 300 s.

Treatment (2): The hot-rolled steel sheet was cold-rolled (sheet thickness: 1.6 mm), was heated thereafter to 860°C for simulating continuous hot-dip galvanizing line by a heat treatment simulator, was cooled thereafter to 400°C with the average cooling rate of 30°C/s, was held, was further held thereafter by 500°C × 10 s for simulating immersion into plating bath - alloying treatment, and was cooled thereafter to the room temperature with the average cooling rate of 20°C/s.

[Table 1]

| Steel No. | Chemical component composition* (mass%) | | | | | | | | | | | | | | | | | | | Ac₃ (°C) | Ms point (°C) |
|---|---|---|---|---|---|---|---|---|---|---|---|---|---|---|---|---|---|---|---|---|---|
| | C | Si | Mn | P | S | Al | B | Ti | N | V | Nb | Cu | Ni | Zr | Mg | Ca | REM | Cr | Mo | | |
| 1 | 0.220 | 1.20 | 1.20 | 0.0050 | 0.0020 | 0.030 | 0.0020 | 0.044 | 0.0040 | – | – | – | – | – | – | – | – | – | – | 865 | 425 |
| 2 | 0.150 | 1.20 | 1.20 | 0.0050 | 0.0020 | 0.030 | 0.0020 | 0.044 | 0.0040 | – | – | – | – | – | – | – | – | 0.20 | – | 880 | 446 |
| 3 | 0.220 | 0.05 | 1.20 | 0.0050 | 0.0020 | 0.030 | 0.0020 | 0.044 | 0.0040 | – | – | – | – | – | – | – | – | 0.20 | – | 812 | 421 |
| 4 | 0.220 | 0.25 | 1.20 | 0.0050 | 0.0020 | 0.030 | 0.0020 | 0.044 | 0.0040 | – | – | – | – | – | – | – | – | 0.20 | – | 821 | 421 |
| 5 | 0.220 | 1.20 | 1.20 | 0.0050 | 0.0020 | 0.030 | 0.0020 | 0.019 | 0.0040 | – | – | – | – | – | – | – | – | 0.20 | – | 853 | 421 |
| 6 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 7 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 8 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 9 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 10 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 11 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 12 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 13 | 0.220 | 1.20 | 1.20 | 0.0050 | 0.0020 | 0.030 | 0.0020 | 0.044 | 0.0040 | – | – | – | – | – | – | – | – | 0.20 | – | 863 | 421 |
| 14 | 0.220 | 2.00 | 1.20 | 0.0050 | 0.0020 | 0.030 | 0.0020 | 0.044 | 0.0040 | – | – | – | – | – | – | – | – | 0.20 | – | 899 | 421 |
| 15 | 0.350 | 1.20 | 1.20 | 0.0050 | 0.0020 | 0.030 | 0.0020 | 0.044 | 0.0040 | – | – | – | – | – | – | – | – | 0.20 | – | 838 | 374 |
| 16 | 0.720 | 1.20 | 1.20 | 0.0050 | 0.0020 | 0.030 | 0.0020 | 0.044 | 0.0040 | – | – | – | – | – | – | – | – | 0.20 | – | 786 | 240 |
| 17 | 0.220 | 1.20 | 0.80 | 0.0050 | 0.0020 | 0.030 | 0.0020 | 0.044 | 0.0040 | – | – | – | – | – | – | – | – | 0.20 | – | 875 | 436 |
| 18 | 0.220 | 1.20 | 2.40 | 0.0050 | 0.0020 | 0.030 | 0.0020 | 0.044 | 0.0040 | – | – | – | – | – | – | – | – | 0.20 | – | 827 | 374 |
| 19 | 0.220 | 1.20 | 1.20 | 0.0050 | 0.0020 | 0.030 | 0.0020 | 0.100 | 0.0040 | – | – | – | – | – | – | – | – | 0.20 | – | 886 | 421 |
| 20 | 0.220 | 1.20 | 1.20 | 0.0050 | 0.0020 | 0.030 | 0.0020 | 0.200 | 0.0040 | – | – | – | – | – | – | – | – | 0.20 | – | 926 | 421 |
| 21 | 0.220 | 0.50 | 1.20 | 0.0050 | 0.0020 | 0.40 | 0.0020 | 0.044 | 0.0040 | – | – | – | – | – | – | – | – | 0.20 | – | 980 | 432 |
| 22 | 0.220 | 1.20 | 1.20 | 0.0050 | 0.0020 | 0.030 | 0.0020 | 0.044 | 0.0040 | 0.030 | – | – | – | – | – | – | – | 0.20 | – | 866 | 421 |
| 23 | 0.220 | 1.20 | 1.20 | 0.0050 | 0.0020 | 0.030 | 0.0020 | 0.044 | 0.0040 | – | 0.020 | – | – | – | – | – | – | 0.20 | – | 863 | 421 |
| 24 | 0.220 | 1.20 | 1.20 | 0.0050 | 0.0020 | 0.030 | 0.0020 | 0.044 | 0.0040 | – | – | 0.20 | – | – | – | – | – | 0.20 | – | 859 | 419 |
| 25 | 0.220 | 1.20 | 1.20 | 0.0050 | 0.0020 | 0.030 | 0.0020 | 0.044 | 0.0040 | – | – | – | 0.20 | – | – | – | – | 0.20 | – | 860 | 417 |
| 26 | 0.220 | 1.20 | 1.20 | 0.0050 | 0.0020 | 0.030 | 0.0020 | 0.044 | 0.0040 | – | – | – | – | – | – | – | – | 0.20 | 0.20 | 869 | 420 |
| 27 | 0.220 | 1.20 | 1.20 | 0.0050 | 0.0020 | 0.030 | 0.0020 | 0.044 | 0.0040 | – | – | – | – | 0.020 | – | – | – | 0.20 | – | 863 | 421 |
| 28 | 0.220 | 1.20 | 1.20 | 0.0050 | 0.0020 | 0.030 | 0.0020 | 0.044 | 0.0040 | – | – | – | – | – | 0.002 | – | – | 0.20 | – | 863 | 421 |
| 29 | 0.220 | 1.20 | 1.20 | 0.0050 | 0.0020 | 0.030 | 0.0020 | 0.044 | 0.0040 | – | – | – | – | – | – | 0.002 | – | 0.20 | – | 863 | 421 |
| 30 | 0.220 | 1.20 | 1.20 | 0.0050 | 0.0020 | 0.030 | 0.0020 | 0.044 | 0.0040 | – | – | – | – | – | – | – | 0.002 | 0.20 | – | 863 | 421 |

*The remainder: iron and inevitable impurities other than P, S, N.

[Table 2]

| Steel No. | Steel sheet manufacturing condition | | | | |
| --- | --- | --- | --- | --- | --- |
| | Heating temperature (°C) | Finish rolling temperature (°C) | Cooling time between 750 and 700°C (s) | Winding temperature (°C) | Remarks |
| 1 | 1200 | 800 | 12 | 500 | - |
| 2 | 1200 | 800 | 12 | 500 | - |
| 3 | 1200 | 800 | 12 | 500 | - |
| 4 | 1200 | 800 | 12 | 500 | - |
| 5 | 1200 | 800 | 12 | 500 | - |
| 6 | 1200 | 800 | 1 | 500 | - |
| 7 | 1200 | 900 | 12 | 500 | - |
| 8 | 1200 | 800 | 12 | 500 | Treatment (1) |
| 9 | 1200 | 800 | 12 | 500 | Treatment (2) |
| 10 | 1200 | 800 | 12 | 500 | - |
| 11 | 1200 | 800 | 12 | 500 | - |
| 12 | 1200 | 800 | 12 | 500 | - |
| 13 | 1200 | 800 | 12 | 500 | - |
| 14 | 1200 | 800 | 12 | 500 | - |
| 15 | 1200 | 800 | 12 | 500 | - |
| 16 | 1200 | 800 | 12 | 500 | - |
| 17 | 1200 | 800 | 12 | 500 | - |
| 18 | 1200 | 800 | 12 | 500 | - |
| 19 | 1200 | 800 | 12 | 500 | - |
| 20 | 1200 | 800 | 12 | 500 | - |
| 21 | 1200 | 800 | 12 | 500 | - |
| 22 | 1200 | 800 | 12 | 500 | - |
| 23 | 1200 | 800 | 12 | 500 | - |
| 24 | 1200 | 800 | 12 | 500 | - |
| 25 | 1200 | 800 | 12 | 500 | - |
| 26 | 1200 | 800 | 12 | 500 | - |
| 27 | 1200 | 800 | 12 | 500 | - |
| 28 | 1200 | 800 | 12 | 500 | - |
| 29 | 1200 | 800 | 12 | 500 | - |
| 30 | 1200 | 800 | 12 | 500 | - |

With respect to the steel sheet obtained, analysis of the precipitation state of Ti (precipitated Ti amount (mass%)-3-4[N], average equivalent circle diameter of Ti-containing precipitates) was executed by the procedure described below. The result is shown in Table 3 below along with the calculated value of $0.5 \times$ (total Ti amount-3.4[N]] (expressed as $0.5 \times$ (total Ti amount -3.4[N])).

[Analysis of precipitation state of Ti of steel sheet]

An extraction replica sample was prepared, and a transmission electron microscope image (magnifications: 100,000 times) of Ti-containing precipitates was photographed using a tansmission electron microscope (TEM). At this time, by composition analysis of the precipitates using an energy dispersion type X-ray spectrometer (EDX), Ti-containing precipitates were identified. The area of the Ti-containing precipitates of at least 100 pieces was measured by image analysis, those having the equivalent circle diameter of 30 nm or less were extracted, and the average value thereof was made the size of the precipitates. Also, in the table, the size is shown as "average equivalent circle diameter of Ti-containing precipitates". Further, with respect to precipitated Ti amount (mass%)-3.4[N] (the Ti amount present as the precipitates), extraction residue analysis (in extraction treatment, the precipitates coagulate, and fine precipitates also can be measured) was executed using a mesh with mesh diameter: 0.1 $\mu$m, and precipitated Ti amount (mass%)-3.4[N] (expressed as "precipitated Ti amount-3.4[N]" in Table 3) was obtained. Also, when the Ti-containing precipitates partly contained V and Nb, the contents of these precipitates were also measured.

[Table 3]

| Steel No. | Steel sheet for press forming use | | | | |
|---|---|---|---|---|---|
| | Precipitated Ti amount-3.4[N] (mass%) | 0.5 × (total Ti amount-3.4[N]) (mass%) | Average equivalent circle diameter of Ti-containing precipitates (nm) | Fraction of ferrite (area%) | Remainder microstructure* |
| 1 | 0.025 | 0.015 | 10.8 | 51 | B |
| 2 | 0.023 | 0.015 | 10.8 | 65 | B |
| 3 | 0.025 | 0.015 | 12.4 | 55 | P+B |
| 4 | 0.030 | 0.015 | 11.5 | 56 | P+B |
| 5 | 0.004 | 0.003 | 12.0 | 54 | B |
| 6 | 0.011 | 0.015 | 10.6 | 14 | B |
| 7 | 0.009 | 0.015 | 2.6 | 41 | B |
| 8 | 0.024 | 0.015 | 10.7 | 59 | B |
| 9 | 0.030 | 0.015 | 11.3 | 52 | B |
| 10 | 0.025 | 0.015 | 12.2 | 54 | B |
| 11 | 0.025 | 0.015 | 12.2 | 54 | B |
| 12 | 0.025 | 0.015 | 12.2 | 54 | B |
| 13 | 0.025 | 0.015 | 12.2 | 54 | B |
| 14 | 0.026 | 0.015 | 11.6 | 59 | B |
| 15 | 0.029 | 0.015 | 11.6 | 34 | B |
| 16 | 0.026 | 0.015 | 12.2 | 5 | B+M |
| 17 | 0.026 | 0.015 | 11.0 | 52 | P+B |
| 18 | 0.027 | 0.015 | 12.7 | 41 | B+M |
| 19 | 0.073 | 0.043 | 13.7 | 55 | B |
| 20 | 0.22 | 0.093 | - | 54 | B |
| 21 | 0.025 | 0.015 | 11.3 | 55 | B |
| 22 | 0.025 | 0.015 | 10.6 | 59 | B |
| 23 | 0.026 | 0.015 | 12.0 | 47 | B |
| 24 | 0.024 | 0.015 | 11.4 | 52 | B |
| 25 | 0.029 | 0.015 | 12.6 | 41 | B |

(continued)

| Steel No. | Steel sheet for press forming use | | | | |
|---|---|---|---|---|---|
| | Precipitated Ti amount-3.4[N] (mass%) | 0.5 × (total Ti amount-3.4[N]) (mass%) | Average equivalent circle diameter of Ti-containing precipitates (nm) | Fraction of ferrite (area%) | Remainder microstructure* |
| 26 | 0.027 | 0.015 | 12.0 | 53 | B |
| 27 | 0.024 | 0.015 | 10.8 | 51 | B |
| 28 | 0.023 | 0.015 | 11.0 | 50 | B |
| 29 | 0.025 | 0.015 | 11.2 | 53 | B |
| 30 | 0.026 | 0.015 | 10.9 | 56 | B |
| * B: bainite, P: pearlite, M: martensite | | | | | |

Each steel sheet described above (1.6 mm$^t$×150 mm×200 mm) (with respect to those other than the treatment of (1) and (2) described above, the thickness was adjusted to 1.6 mm by hot rolling) was heated to a predetermined temperature in a heating furnace, and was thereafter subjected to press forming and cooling treatment using the tool (Fig. 1 above) of a shape to obtain the formed product. The press forming conditions (heating temperature, average cooling rate, and rapid cooling finishing temperature in press forming are shown in Table 4 below.
[Table 4]

| Steel No. | Press forming condition | | |
|---|---|---|---|
| | Heating temperature (°C) | Average cooling rate (°C/s) | Rapid cooling finishing temperature (°C) |
| 1 | 900 | 40 | 300 |
| 2 | 900 | 40 | 300 |
| 3 | 900 | 40 | 300 |
| 4 | 900 | 40 | 300 |
| 5 | 900 | 40 | 300 |
| 6 | 900 | 40 | 300 |
| 7 | 900 | 40 | 300 |
| 8 | 900 | 40 | 300 |
| 9 | 900 | 40 | 300 |
| 10 | 900 | 40 | 300 |
| 11 | 800 | 40 | 300 |
| 12 | 900 | 5 | 300 |
| 13 | 900 | 40 | 600 |
| 14 | 900 | 40 | 300 |
| 15 | 900 | 40 | 300 |
| 16 | 900 | 40 | 300 |
| 17 | 900 | 40 | 300 |
| 18 | 900 | 40 | 300 |
| 19 | 900 | 40 | 300 |
| 20 | 900 | 40 | 300 |
| 21 | 900 | 40 | 300 |

(continued)

| Steel No. | Press forming condition | | |
|---|---|---|---|
| | Heating temperature (°C) | Average cooling rate (°C/s) | Rapid cooling finishing temperature (°C) |
| 22 | 900 | 40 | 300 |
| 23 | 900 | 40 | 300 |
| 24 | 900 | 40 | 300 |
| 25 | 900 | 40 | 300 |
| 26 | 900 | 40 | 300 |
| 27 | 900 | 40 | 300 |
| 28 | 900 | 40 | 300 |
| 29 | 900 | 40 | 300 |
| 30 | 900 | 40 | 300 |

With respect to the formed product obtained, tensile strength (TS), elongation (total elongation EL), observation of the metal microstructure (the fraction of each microstructure), and the carbon amount in retained austenite were measured by methods described below.

[Measurement of tensile strength (TS) and elongation (total elongation EL)]

The tensile test was executed using JIS No. 5 test specimen, and the tensile strength (TS) and the elongation (EL) were measured. At this time, the strain rate of the tensile test was made 10 mm/s. In the present invention, the case any of 1,200 MPa or more of the tensile strength (TS) and 13% or more of the elongation (EL), 1,470 MPa or more of the tensile strength (TS) and 11% or more of the elongation (EL), or 1,800 MPa or more of the tensile strength (TS) and 10% or more of the elongation (EL) was fulfilled and the strength-elongation balance (TS×EL) was 16,000 (MPa %) or more was evaluated to have passed.

[Observation of metal microstructure (fraction of each microstructure)]

(1) With respect to the microstructure of bainitic ferrite, martensite and ferrite in the formed product, the steel sheet was corroded by nital, bainitic ferrite, martensite and ferrite were distinguished from each other by SEM observation (magnifications: 1,000 times or 2,000 times), and each fraction (area ratio) was obtained.
(2) The retained austenite fraction and the carbon amount in retained austenite in the formed product were measured by X-ray diffraction method after the steel sheet was ground up to 1/4 thickness thereof and was thereafter subjected to chemical polishing (for example, ISJJ Int. Vol. 33. (1933), No. 7, P.776).

The observation results (fraction of each microstructure, carbon amount in retained austenite) of the metal microstructure are shown in Table 5 below. Also, the mechanical properties (tensile strength TS, elongation EL and TS×EL) of the formed product are shown in Table 6 below.

[Table 5]

| Steel No. | Metal microstructure of formed product | | | | |
|---|---|---|---|---|---|
| | Fraction of martensite (area%) | Fraction of ferrite (area%) | Fraction of retained austenite (area%) | Carbon amount in retained austenite (mass%) | Others |
| 1 | 95 | 0 | 5 | | |
| 2 | 94 | 0 | 6 | 0.57 | - |
| 3 | 100 | 0 | 0 | - | - |

(continued)

| Steel No. | Metal microstructure of formed product | | | | |
|---|---|---|---|---|---|
| | Fraction of martensite (area%) | Fraction of ferrite (area%) | Fraction of retained austenite (area%) | Carbon amount in retained austenite (mass%) | Others |
| 4 | 96 | 0 | 4 | 0.54 | - |
| 5 | 93 | 0 | 7 | 0.54 | - |
| 6 | 94 | 0 | 6 | 0.43 | - |
| 7 | 93 | 0 | 7 | 0.44 | - |
| 8 | 93 | 0 | 7 | 0.54 | - |
| 9 | 94 | 0 | 6 | 0.56 | - |
| 10 | 93 | 0 | 7 | 0.53 | - |
| 11 | 26 | 46 | 8 | 0.43 | Bainite: 20% (acicular ferrite out of ferrite: 32% |
| 12 | 55 | 15 | 6 | 0.46 | Bainite: 24% |
| 13 | 62 | 11 | 0 | 0.48 | Bainite: 27% |
| 14 | 91 | 0 | 9 | 0.57 | - |
| 15 | 93 | 0 | 7 | 0.56 | - |
| 16 | 80 | 8 | 12 | 0.57 | - |
| 17 | 92 | 0 | 8 | 0.55 | - |
| 18 | 94 | 0 | 6 | 0.54 | - |
| 19 | 93 | 0 | 7 | 0.53 | - |
| 20 | 98 | 0 | 2 | 0.46 | - |
| 21 | 92 | 0 | 8 | 0.52 | - |
| 22 | 92 | 0 | 8 | 0.52 | - |
| 23 | 93 | 0 | 7 | 0.55 | - |
| 24 | 93 | 0 | 7 | 0.53 | - |
| 25 | 94 | 0 | 6 | 0.52 | - |
| 26 | 92 | 0 | 8 | 0.53 | - |
| 27 | 93 | 0 | 7 | 0.56 | - |
| 28 29 | 94 | 0 | 6 | 0.58 | - |
| | 94 | 0 | 6 | 0.56 | - |
| 30 | 93 | 0 | 7 | 0.59 | - |

[Table 6]

| Steel No. | Mechanical properties of formed product | | |
|---|---|---|---|
| | Tensile strength TS (MPa) | Elongation EL (%) | TS × EL (MPa-%) |
| 1 | 1539 | 12.2 | 18776 |
| 2 | 1321 | 13.9 | 18360 |
| 3 | 1552 | 8.2 | 12726 |

(continued)

| Steel No. | Mechanical properties of formed product | | |
|---|---|---|---|
| | Tensile strength TS (MPa) | Elongation EL (%) | TS × EL (MPa-%) |
| 4 | 1527 | 12.3 | 18793 |
| 5 | 1536 | 12.3 | 18863 |
| 6 | 1554 | 8.6 | 13364 |
| 7 | 1535 | 9.0 | 13815 |
| 8 | 1542 | 12.1 | 18688 |
| 9 | 1536 | 12.3 | 18834 |
| 10 | 1544 | 12.3 | 18989 |
| 11 | 1051 | 22.6 | 23761 |
| 12 | 1205 | 14.9 | 17954 |
| 13 | 1260 | 14.4 | 18093 |
| 14 | 1513 | 11.9 | 18031 |
| 15 | 1825 | 11.4 | 20805 |
| 16 | 2110 | 3.5 | 7385 |
| 17 | 1555 | 12.3 | 19108 |
| 18 | 1531 | 12.4 | 19027 |
| 19 | 1564 | 12.3 | 19210 |
| 20 | 1385 | 7.3 | 10111 |
| 21 | 1549 | 12.2 | 18907 |
| 22 | 1540 | 12.5 | 19291 |
| 23 | 1567 | 12.2 | 19163 |
| 24 | 1509 | 12.6 | 19023 |
| 25 | 1527 | 12.4 | 18982 |
| 26 | 1563 | 12.2 | 19131 |
| 27 | 1539 | 12.8 | 19699 |
| 28 | 1544 | 12.5 | 19300 |
| 29 | 1503 | 12.9 | 19389 |
| 30 | 1530 | 12.6 | 19278 |

From these results, following consideration can be made. Those of the steel Nos. 1, 2, 4, 5, 8-10, 14, 15, 17-19, 21-30 are examples fulfilling the requirements stipulated in the present invention, and it is known that the formed product excellent in strength-ductility balance have been obtained.

On the other hand, those of the steel Nos. 3, 6, 7, 11-13, 16, 20 are the comparative examples not fulfilling any of the requirements stipulated in the present invention, and any of the properties is deteriorated. That is, in that of the steel No. 3, a steel sheet with low Si content is used, the fraction of retained austenite in the formed product is not secured, and the elongation is not enough. In that of the steel No. 6, the cooling time at 750-700°C in manufacturing the steel sheet is short, the steel sheet does not fulfill the relationship of the formula (1), the carbon content in retained austenite in the formed product is less, and the elongation of the formed product is deteriorated (the strength-elongation balance (TS×EL) is also deteriorated). In that of the steel No. 7, the finish rolling temperature in manufacturing the steel sheet is high, the steel sheet does not fulfill the relationship of the formula (1), the carbon content in retained austenite in the formed product is less, and the elongation of the formed product is deteriorated (the strength-elongation balance (TS×EL) is also deteriorated).

In that of the steel No. 11, because the heating temperature in forming is low, bainite and ferrite are formed, formation of martensite reduces, and the strength excessively drops. In that of the steel No. 12, the average cooling rate within the tool is slow, the area ratio of martensite cannot be secured, and the strength is low. In that of the steel No. 13, the rapid cooling finishing temperature in press forming is high, the area ratio of martensite cannot be secured, and the strength is low.

In that of the steel No. 16, the steel sheet with excessive C content is used, the strength of the formed product increases, and only low elongation EL is obtained. In that of the steel No. 20, the steel sheet with excessive Ti content is used, Ti-containing precipitates cannot be dissolved in the heating stage in hot rolling, almost all thereof are present as the precipitates of 30 nm or more which reduce solid-dissolved Ti as TiC and become the fracture origin in deformation, and therefore the value of the strength-elongation balance (TS×EL) is low.

The present invention is suitable to manufacturing of press-formed products used in manufacturing structural components of an automobile.

[Reference Signs List]

1    punch
2    die
3    blank holder
4    steel sheet (blank)

**Claims**

1.    A method for manufacturing a press-formed product comprising the steps of:

heating a steel sheet for hot pressing use to a temperature of $Ac_3$ transformation point or above and 950°C or below, the steel sheet for hot pressing use consisting of:

C: 0.15-0.5% means mass%, hereinafter the same with respect to the chemical component composition;
Si: 0.2-3%;
Mn: 0.5-3%;
P: 0.05% or less, exclusive of 0%;
S: 0.05% or less, exclusive of 0%;
Al: 0.01-1%;
B: 0.0002-0.01%;
Ti: 3.4[N]+0.01% or more and 3.4[N]+0.1% or less, [N] expresses the content mass% of N; and
N: 0.001-0.01% respectively,

optionally at least one element selected from the group consisting of V, Nb and Zr by 0.1% or less, exclusive of 0%, in total;
optionally at least one element selected from the group consisting of Cu, Ni, Cr and Mo by 1% or less, exclusive of 0%, in total; and
optionally at least one element selected from the group consisting of Mg, Ca and REM by 0.01% or less, exclusive of 0%, in total,
with the remainder consisting of iron and inevitable impurities,
Ti-containing precipitates contained in the steel sheet, each of which having an equivalent circle diameter of 30 nm or less, have an average equivalent circle diameter of 3 nm or more, wherein the Ti-containing precipitates are selected from TiC, TiN, TiVC, TiNbC, TiVCN and TiNbCN,
and the precipitated Ti amount and the total Ti amount in the steel fulfilling the relationship represented by formula (1) shown below;
thereafter starting press forming; and
being held at the bottom dead point and being cooled to a temperature lower than martensite transformation starting temperature Ms while securing the average cooling rate of 20°C/s or more within a tool.

$$\text{Precipitated Ti amount } \geq \left[ \text{mass\% - 3.4[N]} \geq 0.5 \times [\text{total} \right] \geq$$

~~(mass%)-3.4[N]≥0.5×[(total~~ Ti amount

$$\geq \left[ \text{mass\% - 3.4[N]} \right] \geq \text{~~(mass%))-3.4[N]]~~} \quad \cdots(1)$$

In the formula (1), [N] represents the content mass% of N in the steel.

**2.** A press-formed product of a steel sheet having the chemical component composition according to claim 1, wherein the formed product has a metal microstructure of martensite: 80-97 area%, retained austenite: 3-20 area%, and the remainder microstructure: 5 area% or less, and carbon content in the retained austenite is 0.50% or more.

**Patentansprüche**

**1.** Verfahren zur Herstellung eines pressgeformten Produkts, umfassend die Schritte des:

Erhitzens eines Stahlblechs zur Heißpressverwendung auf eine Temperatur des $Ac_3$-Umwandlungspunkts oder höher und 950° C oder niedriger, wobei das Stahlblech zur Heißpressverwendung aus:

C: 0,15-0,5%, bedeutet Masse-%, im Folgenden in Bezug auf die chemische Komponentenzusammensetzung gleich;
Si: 0,2-3%;
Mn: 0,5-3%;
P: 0,05% oder weniger, ausschließlich 0%;
S: 0,05% oder weniger, ausschließlich 0%;
Al: 0,01-1%;
B: 0,0002-0,01%;
Ti: 3,4[N]+0,01% oder mehr und 3,4[N]+0,1% oder weniger, [N] drückt den Masse-% Gehalt von N aus; und
N: 0,001-0,01%,

gegebenenfalls mindestens ein Element, ausgewählt aus der Gruppe, bestehend aus V, Nb und Zr, zu insgesamt 0,1% oder weniger, ausschließlich 0%;
gegebenenfalls mindestens ein Element, ausgewählt aus der Gruppe, bestehend aus Cu, Ni, Cr und Mo, zu insgesamt 1% oder weniger, ausschließlich 0%; und
gegebenenfalls mindestens ein Element, ausgewählt aus der Gruppe, bestehend aus Mg, Ca und REM, zu insgesamt 0,01% oder weniger, ausschließlich 0%, besteht,
wobei der Rest aus Eisen und unvermeidbaren Verunreinigungen besteht,
wobei Ti-haltige Präzipitate, die in dem Stahlblech enthalten sind, von denen jedes einen äquivalenten Kreisdurchmesser von 30 nm oder weniger aufweist,
einen durchschnittlichen äquivalenten Kreisdurchmesser von 3 nm oder mehr aufweisen, wobei die Ti-haltigen Präzipitate aus TiC, TiN, TiVC, TiNbC, TiVCN und TiNbCN ausgewählt sind,
und wobei die ausgefällte Ti-Menge und die gesamte Ti-Menge in dem Stahl die durch die nachstehend gezeigte Formel (1) dargestellte Beziehung erfüllen;
anschließenden Beginnens des Pressformens; und
Haltens auf dem unteren Totpunkt und Abkühlens auf eine Temperatur, die niedriger als die Martensitumwandlungsstarttemperatur Ms ist, während die durchschnittliche Abkühlgeschwindigkeitsrate von 20°C/s oder mehr innerhalb eines Werkzeuges sichergestellt wird.

$$\text{Ausgefällte Ti-Menge Masse-\% - 3,4[N]} \geq 0,5 \times [\text{gesamte Ti-Menge Masse-\% -}$$
$$3,4[N]] \quad \cdots(1)$$

In der Formel (1) stellt [N] den Masse-% Gehalt von N in dem Stahl dar.

**2.** Pressgeformtes Produkt aus einem Stahlblech mit der chemischen Komponentenzusammensetzung nach Anspruch 1, wobei das geformte Produkt eine Metallmikrostruktur von Martensit: 80-97 Flächen-%, Restaustenit: 3-20 Flächen-% und die restliche Mikrostruktur: 5 Flächen-% oder weniger aufweist und der Kohlenstoffgehalt in dem Restaustenit 0,50% oder mehr beträgt.

## Revendications

1. Procédé de fabrication d'un produit formé par pressage comprenant les étapes de :

   chauffer une tôle d'acier pour pressage à chaud à une température allant du point de transformation $Ac_3$ ou plus jusqu'à 950°C ou moins, la tôle d'acier pour pressage à chaud consistant en :

   C : 0,15-0,5% signifie en %massique, ci-après de même par rapport à la composition de l'élément chimique ;
   Si : 0,2-3% ;
   Mn : 0,5-3% ;
   P : 0,05% ou mois, excluant 0% ;
   S : 0,05% ou moins, excluant 0% ;
   Al : 0,01-1% ;
   B : 0,0002-0,01% ;
   Ti : 3,4[N]+0,01% ou plus et 3,4[N]+0,01% ou moins, [N] étant la quantité en %massique de N ; et
   N : 0,001-0,01% respectivement,

   optionnellement au moins un élément sélectionné parmi le groupe consistant en V, Nb et Zr dans une quantité totale de 0,1% ou moins, excluant 0% ;
   optionnellement au moins un élément sélectionné parmi le groupe consistant en Cu, Ni, Cr et Mo dans une quantité totale de 1% ou moins, excluant 0% ;
   optionnellement au moins un élément sélectionné parmi le groupe consistant en Mg, Ca et un métal terre rare dans une quantité totale de 0,01% ou moins, excluant 0%,
   le reste consistant en du fer et d'inévitables impuretés,
   des précipités comprenant du Ti compris dans la tôle d'acier, chacun ayant un diamètre de cercle équivalent de 30nm ou moins, ont un diamètre de cercle équivalent moyen de 3nm ou plus, où les précipités comprenant du Ti sont sélectionnés parmi TiC, TiN, TiVC, TiNbC, TiVCN et TiNbCN,
   et la quantité de Ti précipité et la quantité totale de Ti dans l'acier remplissant la relation représentée par la formule (1) montrée ci-dessous ;
   par la suite commencer le formage par presse ; et
   étant maintenue au point mort inférieur dans un outil et étant refroidie à une température inférieure à la température de début de transformation du martensite Ms tout en fournissant une vitesse moyenne de refroidissement de 20°C/s ou plus.

   $$\text{Quantité de Ti précipité en \%massique} - 3,4[N] \geq 0,5 \times [\text{quantité de Ti en \%massique} - 3,4[N]] \qquad (1)$$

   Dans la formule (1), [N] représente la quantité en %massique de N dans l'acier.

2. Produit formé par pressage d'une tôle d'acier ayant la composition chimique selon la revendication 1, où le produit formé a une microstructure métallique de martensite : 80-97%surfacique, austénite de trempe : 3-20%surfacique, et la microstructure restante : 5%surfacique ou moins, et la quantité de carbone dans l'austénite de trempe est de 0,50% ou plus.

EP 2 824 195 B1

# F I G . 1

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010065292 A
- JP 2010065293 A
- JP 2010065294 A
- JP 2010065295 A
- EP 2719788 A1

**Non-patent literature cited in the description**

- *ISJJ Int.,* 1933, vol. 33 (7), 776